# FASCICULE DE BREVET EUROPEEN

(11) **EP 1 420 181 B1**
(45) Date de publication et mention de la délivrance du brevet: **30.11.2005**
(21) Numéro de dépôt: 03292342.7
(22) Date de dépôt: 24.09.2003
(51) Int. Cl.: F16D 3/205, E05B 17/04

(54) **Système de retenue en translation de deux pièces rotatives et procédé de montage de ces deux pièces**
Kopplungssystem für zwei drehbare Teile und Montageverfahren desselben
System for coupling two rotating parts and method of mounting these two parts

(30) Priorité: 14.11.2002 FR 0214260
(43) Date de publication de la demande: 19.05.2004
(73) Titulaire: Peugeot Citroen Automobiles SA, 78943 Vélizy-Villacoublay Cedex (FR)
(72) Inventeur: Flaive, Dominique, 25400 Audincourt (FR)
(74) Mandataire: Lanceplaine, Jean-Claude

(56) Documents cités:
- EP-A- 0 943 759
- DE-U- 1 747 648
- US-A- 3 895 501

## Description

La présente invention concerne un système de retenue en translation de deux pièces rotatives et articulées, ainsi qu'un procédé de montage de ces pièces.

Dans de nombreuses applications, on utilise des pièces articulées entre elles et qui transmettent un mouvement de rotation entre un organe d'entrée rotatif et un organe de sortie rotatif, les axes de ces deux organes n'étant pas forcément coaxiaux.

Un système de retenue en translation selon le préambule de la revendication 1 est connu de EP-A-0 943 759.

C'est le cas par exemple, des mécanismes de serrure de porte des véhicules automobiles.

En effet, ces mécanismes comportent un organe d'entrée rotatif constitué par un axe d'une serrure et un organe de sortie rotatif comprenant un arbre de verrou et ces organes doivent être reliés entre eux pour transmettre le mouvement de rotation afin de réaliser la condamnation et la décondamnation de la porte en mode manuel de fonctionnement par la clé de contact.

Pour cela, une des extrémités de l'arbre de verrou comporte une sphère d'articulation munie de deux bras radiaux opposés, s'étendant vers l'extérieur, tandis que l'extrémité de l'axe de serrure destiné à coopérer avec l'extrémité de l'arbre de verrou comporte un tube comprenant un logement interne de réception de ladite sphère d'articulation et muni de deux fentes axiales débouchant sur l'extrémité libre de ce tube. Chaque fente est destinée à recevoir en coulissement et en rotation l'un des bras radiaux de la sphère d'articulation. La coopération des bras radiaux et des fentes permet de réaliser la liaison en rotation des deux pièces.

La liaison en translation de ces pièces est obtenue par un élément de blocage supplémentaire venant généralement se fixer sur le boîtier de serrure.

L'ajout de cette pièce nécessite donc des opérations de montage supplémentaire ce qui augmente le coût d'assemblage des différents éléments.

L'invention a pour but d'éviter ces inconvénients en proposant un système de retenue en translation de deux pièces rotatives et articulées, simple à mettre en oeuvre et fiable.

L'invention a donc pour objet un système de retenue en translation de deux pièces rotatives et articulées, une première pièce étant formée par un arbre comportant à une extrémité une sphère d'articulation munie de deux bras radiaux opposés, s'étendant vers l'extérieur et une seconde pièce étant formée par un axe comportant à une extrémité libre une paroi cylindrique munie d'un logement interne de réception de ladite sphère d'articulation, la paroi cylindrique comportant deux fentes axiales et opposées caractérisé en ce que les deux fentes ménagent chacune au niveau de l'extrémité libre de ladite paroi une portion de paroi pleine, la portion de paroi pleine de l'une des fentes comportant une rainure de guidage et la distance entre les deux portions de parois pleines étant inférieure à la distance entre les extrémités des deux bras radiaux pour bloquer ladite sphère d'articulation dans ledit logement interne et retenir les deux pièces.

Selon une autre caractéristique de l'invention, chaque fente débouche radialement sur la face externe de la paroi cylindrique.

L'invention a également pour objet un procédé de montage de deux pièces rotatives et articulées comportant un système de retenue en translation tel que précédemment mentionné, caractérisé en ce que :
- on incline la première pièce par rapport à la seconde pièce,
- on positionne l'un des bras radiaux de la sphère d'articulation de la première pièce dans la fente opposée à la fente prolongée par la rainure de guidage,
- on fait pivoter la première pièce pour l'amener sensiblement dans l'axe de la seconde pièce en faisant glisser l'autre bras radial dans la rainure de guidage, et
- on positionne ledit bras radial dans la fente située dans le prolongement de cette rainure de guidage.

L'invention a aussi pour objet un arbre de verrou et un axe de serrure d'une porte d'un véhicule automobile comportant un tel système de retenue.

D'autres caractéristiques et avantages de l'invention apparaîtront à la lecture de la description qui va suivre, donnée à titre d'exemple et faite en référence aux dessins annexés, sur lesquels :
- la Fig. 1 est une vue schématique en perspective éclatée de deux pièces rotatives munies d'un système de retenue en translation conforme à l'invention,
- la Fig. 2 est une vue schématique en coupe axiale des extrémités adjacentes des deux pièces,
- les Figs. 3 à 5 sont des vues schématiques en coupe axiale montrant le montage des deux pièces.

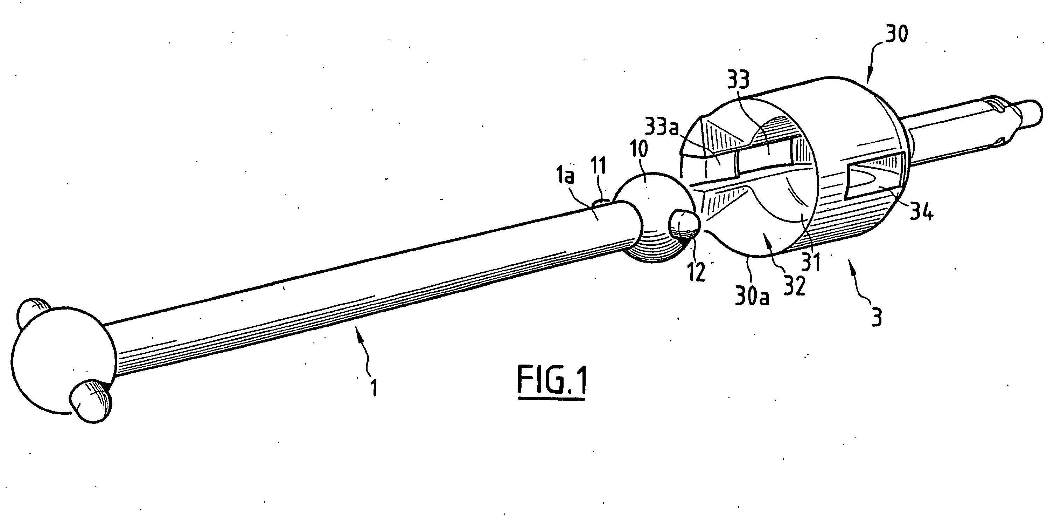

Sur la Fig. 1, on a représenté schématiquement, deux pièces respectivement 1 et 3, destinées à être solidarisées entre elles en rotation et en translation pour transmettre un mouvement de rotation, ces deux pièces pouvant subir un désalignement axial l'une par rapport à l'autre.

La description qui suit sera faite en prenant comme exemple de pièce respectivement un arbre 1 de verrou et un axe 3 d'une serrure d'un mécanisme de serrure d'une porte d'un véhicule automobile, ces pièces étant munies d'un dispositif de retenue en translation l'une par rapport à l'autre conforme à l'invention.

Ce système de retenue peut être ménagé sur tous types de pièces rotatives et articulées entre elles.

La première pièce constituée par l'arbre 1 de verrou comporte à une extrémité 1a une sphère d'articulation 10 munie de deux bras radiaux et opposés, respectivement 11 et 12. Ces bras 11 et 12 s'étendent vers l'extérieur de la sphère d'articulation 10.

La seconde pièce constituée par l'axe 3 de serrure comporte à une extrémité 3a une paroi cylindrique 30 munie d'un logement interne 31 de réception de la sphère d'articulation 10. Le logement interne cylindrique 31 est complémentaire des dimensions de ladite sphère d'articulation 10.

Le logement interne 31 débouche à l'extérieur par un orifice 32 pour l'introduction de la sphère d'articulation 10 et la paroi cylindrique 30 comporte deux fentes axiales et opposées, respectivement 33 et 34.

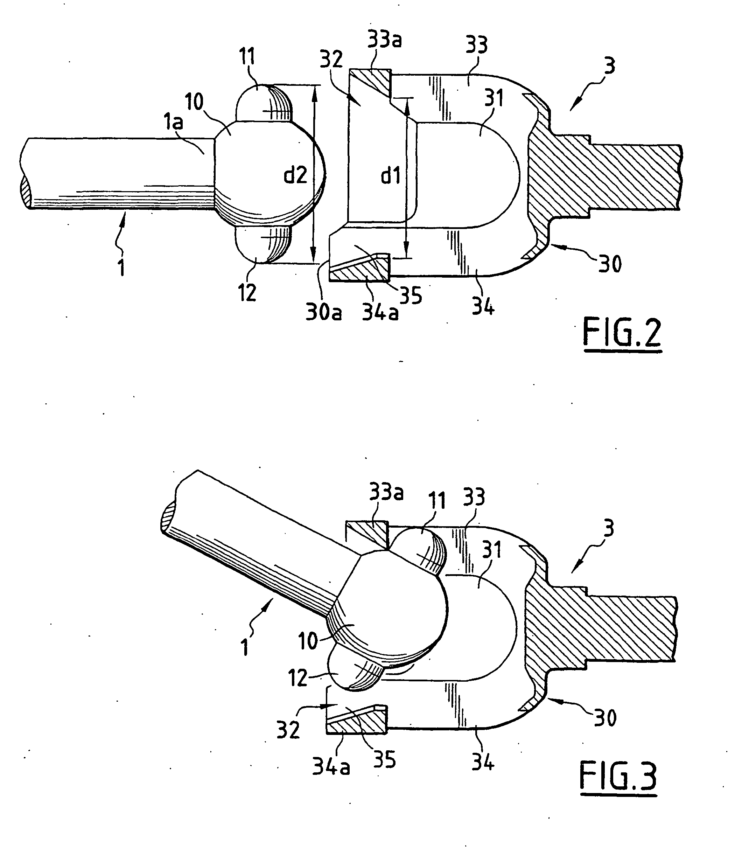

Ainsi que représenté sur les Figs. 1 et 2, les fentes 33 et 34 ne s'étendent pas sur toute la longueur de la paroi périphérique 30 et ménagent chacune avec l'extrémité libre 30a de ladite paroi cylindrique 30 une portion de paroi pleine, respectivement 33a et 34a. Par ailleurs, la portion de paroi pleine 34a comporte une rainure de guidage 35 située dans l'axe de la fente 34 et s'étendant entre l'extrémité libre 30a et la fente 34.

Comme montré à la Fig. 2, la distance d1 entre les deux portions de parois pleines, respectivement 33a et 34a est inférieure à la distance d2 entre les extrémités des deux bras radiaux, respectivement 11 et 12, chaque fente, respectivement 33 et 34, débouche radialement sur la face externe de la paroi cylindrique 30 et l'orifice 32 de cette paroi cylindrique 30 est conique.

En se reportant maintenant aux Figs. 3 à 5, on va décrire le montage des deux pièces 1 et 3.

Tout d'abord, comme montré à la Fig. 3, l'opérateur incline l'arbre 1 par rapport à l'axe 3 et positionne l'un des bras radiaux, comme par exemple le bras radial 11 de la sphère d'articulation 10 dans la fente 33 opposée à la fente 34 prolongée par la rainure de guidage 35.

Ensuite, l'opérateur fait progressivement pivoter l'arbre 1 pour l'amener sensiblement dans le prolongement de l'axe 3.

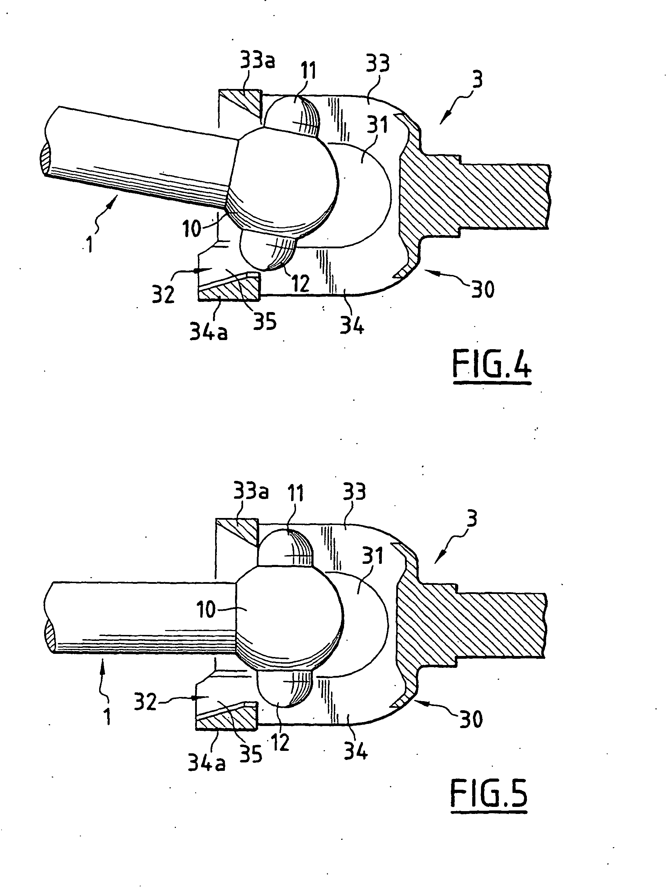

Au cours de ce pivotement, l'autre bras radial 12 glisse dans la rainure de guidage 35, comme montré à la Fig. 4.

Lorsque l'arbre 1 est aligné avec l'axe 3, le bras radial 11 est placé dans la rainure 33 et le bras radial 12 est placé dans la rainure 34, ainsi que montré à la Fig. 5.

Etant donné que d2 est supérieur à d1 les deux bras radiaux, respectivement 11 et 12, empêchent l'extraction axiale de l'arbre 1 par rapport à l'axe 3 dans cette position. Seule une rotation de l'arbre 1 par rapport à l'axe 3 pour revenir à la position utilisée lors du montage, peut permettre le démontage de ces deux pièces.

L'ensemble formé par les deux bras radiaux 11 et 12, les deux fentes 33 et 34 et les deux portions de parois pleines 33a et 34a forment un système de retenue en translation des deux pièces et permet de transmettre le mouvement de rotation entre ces deux pièces.

Le système de retenue conforme à l'invention présente l'avantage d'être facile à monter et ne nécessite aucun élément supplémentaire pour le maintien des deux pièces.

## Revendications

1. Système de retenue en translation de deux pièces (1 ; 3) rotatives et articulées, une première pièce étant formée par un arbre (1) comportant à une extrémité (1a) une sphère d'articulation (10) munie de deux bras radiaux (11, 12) opposés, s'étendant vers l'extérieur et une seconde pièce étant formée par un axe (3) comportant à une extrémité (3a) une paroi cylindrique (30) munie d'un logement interne (31) de réception de ladite sphère d'articulation (10), la paroi cylindrique (30) comportant deux fentes (33, 34) axiales et opposées **caractérisé en ce que** les deux fentes (33, 34) ménagent chacune au niveau de l'extrémité libre (30a) de ladite paroi (30) une portion de paroi pleine (33a, 34a), la portion de paroi pleine (34a) de l'une (34) des fentes comportant une rainure de guidage (35) et la distance entre les deux portions de parois pleines (33a, 34a) étant inférieure à la distance entre les extrémités des deux bras radiaux (11, 12) pour bloquer ladite sphère d'articulation (10) dans ledit logement interne (31) et retenir les deux pièces.

2. Système selon la revendication 1, **caractérisé en ce que** chaque fente (33, 34) débouche radialement sur la face externe de la paroi cylindrique (30).

3. Procédé de montage de deux pièces (1 ; 3) rotatives et articulées comportant un système de retenue en translation selon la revendication 1 ou 2, **caractérisé en ce que** :
- on incline la première pièce (1) par rapport à la seconde pièce (3),
- on positionne l'un (11) des bras radiaux (11 ; 12) de la sphère d'articulation (10) de la première pièce (1) dans la fente (33) opposée à la fente (34) prolongée par la rainure de guidage (35),
- on fait pivoter la première pièce (1) pour l'amener sensiblement dans l'axe de la seconde pièce (3) en faisant glisser l'autre (12) des bras radiaux (11, 12) dans la rainure de guidage (35), et
- on positionne ledit bras radial (12) dans la fente (34) située dans le prolongement de cette rainure de guidage (35).

4. Arbre (1) de verrou et axe (3) de serrure d'une porte d'un véhicule automobile, **caractérisé en ce qu'**il comporte un système de retenue selon la revendication 1 ou 2.

## Patentansprüche

1. System zum Translationsrückhalt zweier drehbeweglicher und angelenkter Teile (1; 3), wobei ein erstes Teil durch eine Welle (1) gebildet ist, die an einem Ende (1a) eine Gelenkkugel (10) umfasst, die mit zwei radialen, entgegengesetzten Armen (11, 12) ausgestattet ist, die sich nach außen erstrecken, und wobei ein zweites Teil durch eine Achse (3) gebildet ist, die an einem Ende (3a) eine zylindrische Wand (30) umfasst, die mit einer Innenaufnahme (31) zur Aufnahme der Gelenkkugel (10) ausgestattet ist, wobei die zylindrische Wand (30) zwei axiale und entgegengesetzte Schlitze (33, 34) umfasst,
**dadurch gekennzeichnet, dass**
an den beiden Schlitzen (33, 34) jeweils im Bereich des freien Endes (30a) der Wand (30) ein massiver Wandabschnitt (33a, 34a) vorgesehen ist, wobei der massive Wandabschnitt (34a) von einem (34) der Schlitze eine Führungsrille (35) umfasst und der Abstand zwischen den beiden massiven Wandabschnitten (33a, 34a) kleiner ist als der Abstand zwischen den Enden der beiden radialen Arme (11, 12), um die Gelenkkugel (10) in der Innenaufnahme festzusetzen und die beiden Teile zurückzuhalten.

2. System nach Anspruch 1,
**dadurch gekennzeichnet, dass**
jeder Schlitz (33, 34) radial in der Außenfläche der zylindrischen Wand (30) mündet.

3. Montageverfahren für zwei drehbewegliche und angelenkte Teile (1; 3) mit einem System zum Translationsrückhalt nach Anspruch 1 oder 2,
**dadurch gekennzeichnet, dass:**
- das erste Teil (1) bezüglich des zweiten Teils (3) geneigt wird,
- einer (11) der radialen Arme (11; 12) der Gelenkkugel (10) des ersten Teils (1) im Schlitz (33) positioniert wird, der dem Schlitz (34), der durch die Führungsrille (35) verlängert ist, entgegengesetzt ist,
- das erste Teil (1) geschwenkt wird, um es im Wesentlichen in die Achse des zweiten Teils (3) zu bringen, indem man den anderen (12) der radialen Arme (11, 12) in die Führungsrille (35) gleiten lässt, und
- der radiale Arm (12) im Schlitz (34) positioniert wird, der sich in der Verlängerung dieser Führungsrille (35) befindet.

4. Riegelwelle (1) und Schlossachse (3) für eine Kraftfahrzeugtüre,
**dadurch gekennzeichnet, dass**
sie ein Rückhaltesystem nach Anspruch 1 oder 2 umfasst.

## Claims

1. A system for retaining in translation two articulated rotary parts (1; 3) whereof a first part is a rod (1) having at one end (1a) a ball (10) with two outwardly extending opposed radial arms (11, 12) and a second part is a shaft (3) having at one end (3a) a cylindrical wall (30) provided with an internal housing (31) for receiving said ball (10), the cylindrical wall (30) comprising two opposed axial slots (34), the two slots (33, 34) each forming at the free end (30a) of said wall (30) a solid wall portion (33a, 34a), the solid wall portion (34a) of one slot (34) comprising a guide groove (35) and the distance between the two solid wall portions (33a, 34a) being less than the distance between the ends of the two radial arms (11, 12) in order to lock said ball (10) in said internal housing (31) and to retain the two parts.

2. A system according to claim 1, **characterised in that** each slot (33, 34) opens radially onto the external face of the cylindrical wall (30).

3. A method of assembling two articulated rotary parts (1; 3) including a retaining system according to claim 1 or claim 2, **characterised in that**:
- the first part (1) is inclined relative to the second part (3),
- one radial arm (11) of the radial arms (11; 12) on the ball (10) of the first part (1) is positioned in the slot (33) opposite the slot (34) that is extended by the guide groove (35),
- the first part (1) is pivoted to move it substantially onto the axis of the second part (3), the other radial arm (12) of the radial arms (11, 12) sliding in the guide groove (35), and
- other said radial arm (12) is positioned in the slot (34) aligned with the guide groove (35).

4. A latch rod (1) and a lock shaft (3) of an automobile vehicle door lock, **characterised in that** they comprise a retaining system according to claim 1 or claim 2.
